# EUROPÄISCHE PATENTSCHRIFT

(11) **EP 0 877 682 B1**
(45) Veröffentlichungstag und Bekanntmachung des Hinweises auf die Patenterteilung: **26.04.2000**
(21) Anmeldenummer: 96900883.8
(22) Anmeldetag: 29.01.1996
(51) Int. Cl.: B60R 21/16

(54) **GASSACK FÜR EIN AIRBAGMODUL UND VERFAHREN ZUR FALTUNG DES GASSACKES**
GAS BAG FOR AN AIRBAG MODULE AND METHOD OF FOLDING SAID GAS BAG
POCHE DE GAZ POUR MODULE D'AIRBAG ET PROCEDE PERMETTANT DE PLIER LADITE POCHE DE GAZ

(43) Veröffentlichungstag der Anmeldung: 18.11.1998
(73) Patentinhaber: Petri AG, 63743 Aschaffenburg (DE)
(72) Erfinder: MAROTZKE, Thomas, D-13187 Berlin (DE)
(74) Vertreter: Bärmann, Klaus, Dipl.-Ing.
(86) Internationale Anmeldenummer: DE9600147
(87) Internationale Veröffentlichungsnummer: WO9728024

(56) Entgegenhaltungen:
- DE-A- 4 343 026
- DE-A- 4 422 276
- DE-C- 19 502 744
- PATENT ABSTRACTS OF JAPAN vol. 007, no. 133 (M-221), 10.Juni 1983 & JP,A,58 049541 (NISSAN JIDOSHA KK), 23.März 1983,

## Beschreibung

Die Erfindung betrifft einen Gassack und ein Verfahren zu seiner Faltung nach den Oberbegriffen der Ansprüche 1 und 8.

In Airbagmodulen sind Gassäcke in ihrer Ruhelage im Bereich eines Gasgenerators in einem gefalteten Zustand angeordnet. Dabei kommt es unter anderem darauf an, die Faltung und die Ablage im Bereich des Gasgenerators so vorzunehmen, daß sich der Gassack nach dem Zünden des Gasgenerators leicht entfaltet und ungehindert und schnell mit dem Gas füllen kann.

Bekannt ist die sogenannte Leporello-Faltung. Dabei wird der ausgebreitete Gassack, ausgehend von einer zentralen (gedachten) Mittelinie zu beiden Seiten dieser Linie ziehharmonikaartig in Falten gelegt, so daß ein länglicher, in etwa rechteckiger Streifen entsteht. Anschließend wird dieser Streifen auch in seiner Längsrichtung nochmals mehrfach gefaltet, indem die Enden über den mittleren Bereich gelegt werden, bzw. indem die Enden eingerollt werden. Ein Beispiel zeigt die EP 0 614 786 A1.

Der Nachteil dieser Faltung besteht darin, daß nach Zündung des Gasgenerators und bei dem dabei im Zentrum des Gassackes entstehenden Gasdruck die äußeren durch Querfalten gelegten Falten die Entfaltung der Längsfalten behindern und daß sich zunächst die zuletzt eingeschlagenen Querfalten, die vor allem in den äußeren Bereichen von dem im Zentrum entstehenden Gasdruck zunächst nur schlecht erreicht werden, zuerst entfalten, bevor auch eine Entfaltung der beim Zusammenlegen des Gassackes zuerst gefalteten Längsfalten stattfinden kann.

Weiterhin besteht der Nachteil, daß die so gefalteten Gassäcke zumindest teilweise noch von Hand gefaltet werden müssen.

Aus der DE 41 38 645 A1 ist ein Airbag bekannt, der zunächst in Zickzack-Form in eine Vielzahl von längsgerichteten Faltbahnen an gegenüberliegenden Seitenbereichen des Airbags gefaltet wird. Dann wird der Airbag in Zickzack-Form in eine Vielzahl von quergerichteten Faltbahnen vom rückwärtigen Ende des Airbags außerhalb des Aufnahmeraumes zum vorderen Ende des Airbags gefaltet.

Weiterhin ist aus der DE 43 43 026 A1 ein Airbag bekannt, der zunächst von den Seiten her nach innen eingeschlagen wird. Anschließend werden die Mitten der eingeschlagenen Teile nach außen gezogen. Der so vorgefaltete Airbag wird quer zu der ersten Faltungsrichtung nochmals gefaltet.

Auch bei diesen Faltungsarten besteht der Nachteil, daß sie sich nur mit hohem Aufwand maschinell falten lassen und daß sich die Falten überschneiden, wodurch sie sich bei der Entfaltung gegenseitig behindern.

Es ist aus der gattungsbildenden DE 44 22 276 A1 auch bekannt, den Gassack entlang von Hauptfaltlinien zu falten, die zumindest zu einem Teil entlang geschlossener Bahnen um ein gedachtes Zentrum auf dem im wesentlichen leeren, ausgebreiteten Luftsack herum verlaufen. Damit ergibt sich von einem gedachten Zentrum des ausgebreiteten Gassackes ausgehend, eine Art konzentrische Zickzack- bzw. Ziehharmonikafaltung. Bevorzugt bilden die Hauptfaltlinien konzentrische Kreise oder Ellipsen.

Bei dem so gefalteten Gassack ist ein Übereinanderfalten einzelner Abschnitte des Gassackes nicht mehr erforderlich. Vielmehr wird durch eine Raffung des Gassackes das kompakte Zusammenlegen des Gassackes möglich. Der so gefaltete Gassack kann sich nach dem Zünden des Gasgenerators schnell und ungehindert in alle Richtungen entfalten und das Falten kann auch weitgehend automatisch durchgeführt werden.

Der Erfindung liegt die Aufgabe zugrunde, bei einer geradlinigen ziehharmonikaartigen Faltung eines Gassackes eine schnellere Entfaltung nach Zünden des Gasgenerator und eine Automatisierung der Faltung zu erreichen.

Erfindungsgemäß wird das gemäß den Merkmalen des Anspruchs 1 erreicht.

Bei einem Gassack für ein Airbagmodul mit im Bereich eines Gasgenerators im Ruhezustand ziehharmonikaartig gefaltetem Gassack ist das durch die Ziehharmonikafaltung gebildete Gassackpaket zusätzlich mindestens einmal in einer Ebene abgebogen, die senkrecht zu den Faltflächen und parallel zu den Faltkanten verläuft. Insbesondere ist das durch die Ziehharmonikafaltung gebildete Gassackpaket zusätzlich mindestens einmal in einer Ebene abgebogen, die bezüglich der Ziehharmonikafaltung senkrecht zu den Faltflächen, parallel zu den beiden Ebenen, in denen jeweils die unteren und die oberen Faltkanten liegen, und parallel zu der im Einbauzustand dem Insassen zugewandten Frontseite des Airbagmoduls verläuft.

Dabei ist das Gassackpaket, ausgehend von zwei bezüglich des Gasgenerators gegenüberliegenden Abschnitten, insbesondere mehrfach in Richtung der Enden des Gassackpaketes gefaltet.

In einer bevorzugten Ausführungsform ist das Gassackpaket mehrfach so gefaltet, daß in der zweiten Faltrichtung ebenfalls eine Ziehharmonikafaltung vorliegt.

Ein derart gefalteter Gassack läßt sich in gleicher Weise leicht entfalten, wie ein Gassack, der entsprechend der oben genannten Raffaltung konzentrich gefaltet ist, da kein Abschnitt des Gassackes über den anderen gefaltet ist. Weiterhin besteht der Vorteil, daß über dem Gasgenerator nur eine Lage des Gassackes liegt. Beim Aufblasen des Gassackes wird diese Lage in Richtung des Fahrzeuginsassen bewegt und zieht die Falten des Gassackpaketes hinter sich her. Dadurch wird die gleiche günstige Entfaltung wie bei der Raffaltung erreicht. Im Gegensatz dazu wird bei anderen bekannten Faltungsarten, bei denen das Faltpaket über dem Gasgenerator liegt, der Gassack beim Aufblasen hinausgedrückt.

Diese Faltung ist besonders vorteilhaft bei einem Fahrer-Airbagmodul anwendbar, bei dem der Gassack um einen topfförmigen Gasgenerator herum gefaltet ist, wobei die Höhe des gefalteten Gassackpaketes etwa der Höhe des Gasgenerators entspricht. Auch in dieser Ausführungsform ergeben sich die gleichen Vorteile wie bei einem Gassack mit konzentrischer Raffaltung.

In einer Ausführungsform für einen Fahrerairbag ist der Gassack seitlich des Gasgenerators beidseitig abgebogen. Die dabei entstehenden Streifen des ziehharmonikaartig gefalteten Gassackpaketes sind im Bereich der Speichen des Lenkrades untergebracht.

In einer Ausführungsform, bei der ein Rohrgasgenerator innerhalb oder unterhalb des Gassackes angeordnet ist, ist der Gassack zumindest annähernd parallel zur Längsachse des Rohrgasgenerators gefaltet. Die über die Enden des Rohrgasgenerators überstehenden Streifen des gefalteten Gassackes sind in entgegengesetzten Richtungen abgebogen und an die mittleren Abschnitte oder an das Mittelteil des Gassackes angelegt.

In einer Ausführungsform, bei der der Gassack asymmetrich bezüglich eines Rohrasgenerators angeordnet ist, steht der zumindest annähernd parallel zur Längsachse des Rohrgasgenerators gefaltete Gassack nur an einem Ende des Rohrgasgenerators über und der überstehende Streifen liegt einseitig am Rohrgasgenerator an. Auch in diesem Fall ist der Rohrgasgenerator innerhalb oder unterhalb des Gassackes angeordnet.

Die erfindungsgemäße Faltung wird in der Weise realisert, daß der Gassack in einem ersten Schritt in gerade, zumindest annähernd parallele Falten gelegt wird und daß das so entstandene Gassackpaket anschließend von seinem mittleren Bereich ausgehend zum Ende der Falten hin in einer Ebene, die senkrecht zu den Faltflächen, parallel zu den beiden Ebenen, in denen jeweils die unteren und die oberen Faltkanten liegen, und parallel zu der im Einbauzustand dem Insassen zugewandten Frontseite des Airbagmoduls verläuft, zusätzlich mindestens einmal abgebogen wird. Bevorzugt wird das Gassackpaket in dieser Ebene ebenfalls ziehharmonikaartig gefaltet.

Bei der bevorzugten Anwendung der Faltung für einen Fahrer-Airbagmodul wird der Gassack beidseitig eines topfförmigen Gasgenerators in einem ersten Schritt in geraden, parallelen Falten in Richtung des Gasgenerators gefaltet. In einem zweiten Schritt werden die am Gasgenerator überstehenden Bereiche des Gassackes zu einem Paket verdichtet, die anschließend ziehharmonikaartig an den Gasgenerator herangefaltet werden.

In einer Ausführungsform wird bei einem Airbagmodul, bei dem ein Rohrgasgenerator innerhalb oder unterhalb eines Gassackes angeordnet ist, der Gassack zunächst zumindest annähernd parallel zur Längsachse des Rohrgasgenerators gefaltet. Anschließend werden die über die Enden des Rohrgasgenerators überstehenden Streifen des gefalteten Gassackes in entgegengesetzte Richtungen abgebogen und an die mittleren Abschnitte bzw. an das Mittelteil des Gassackes angelegt.

In einer weiteren Ausführungsform wird bei einem Airbagmodul, bei dem ein Rohrgasgenerator asymmetrisch innerhalb oder unterhalb des Gassackes angeordnet ist, der Gassack zumindest annähernd parallel zur Längsachse des Rohrgasgenerators gefaltet und der über ein Ende des Rohrgasgenerators ragende Streifen des gefalteten Gassackes wird an den Rohrgasgenerator angelegt.

Die Erfindung soll in Ausführungsbeispielen anhand von Zeichnungen näher erläutert werden. Es zeigen:
- Fig. 1: die Draufsicht auf einen ausgebreiteten Gassack mit darunter liegendem Gasgenerator in Topfform;
- Fig. 2: den Gassack nach Fig. 1 im parallel gefalteten Zustand mit darunter liegendem Gasgenerator;
- Fig. 3: einen Schnitt A -A durch den nach Fig. 2 bzw. Fig. 4 gefalteten Gassack;
- Fig. 4: einen an seinen Enden weiter parallel gefalteten Gassack nach Fig. 2;
- Fig. 5 bis 7: Faltschritte für das zusätzliche ziehharmonikaartige Falten des Gassackpaketes;
- Fig. 8: die Anordnung eines nach Fig. 5 gefalteten Gassackes in einem Lenkrad;
- Fig. 9: einen gefalteten Gassack mit innen liegendem Rohrgasgenerator;
- Fig. 9a: eine Variante des Ausführungsbeispiels der Fig. 9
- Fig. 10: einen über einem Gasgenerator angeordneten gefalteten Gassack.

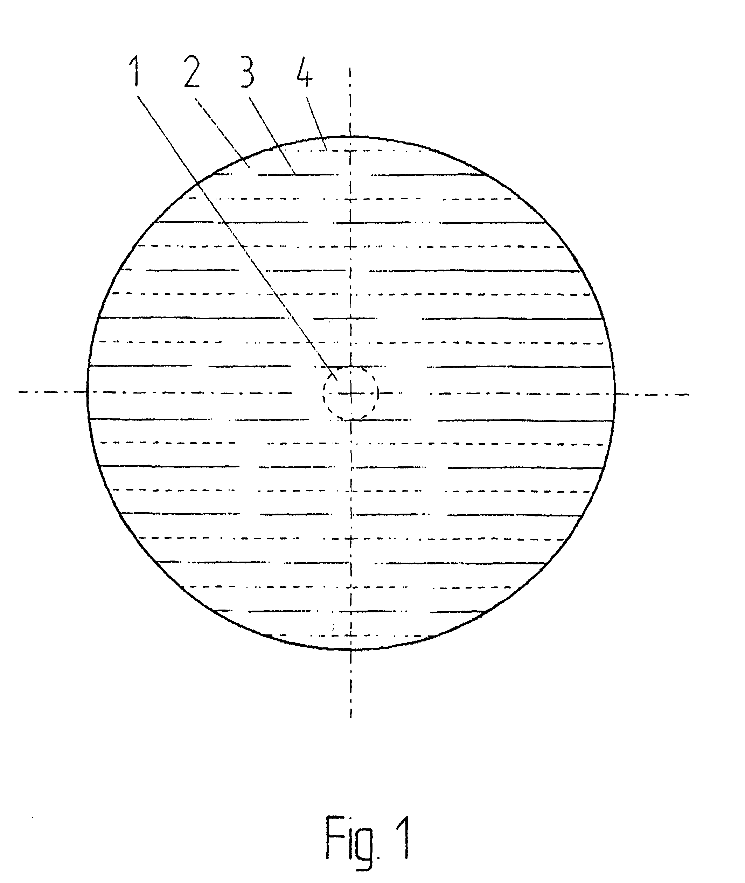

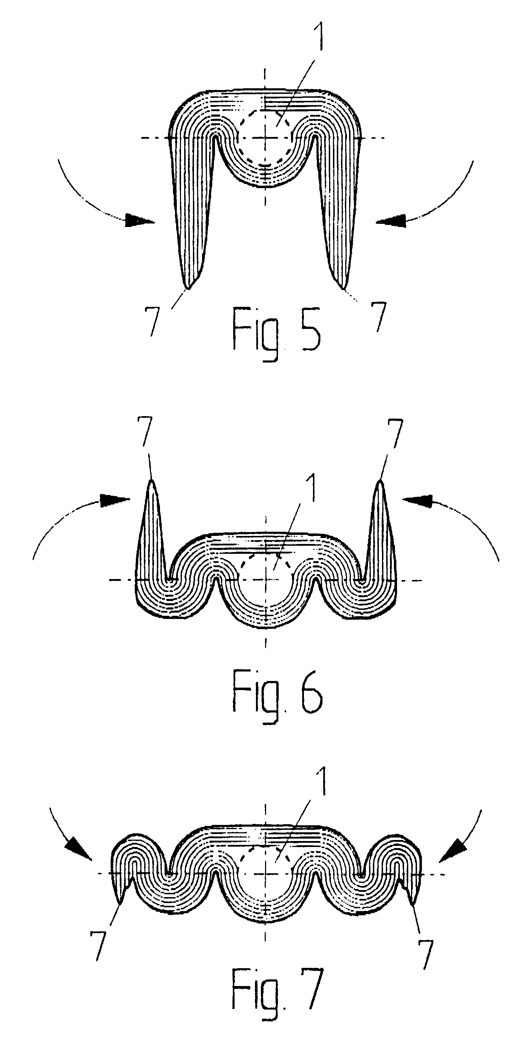

In der Fig. 1 ist schematisch ein Gasgenerator 1 dargestellt, an dem ein Gassack 2 befestigt ist, der im ausgebreiteten Zustand dargestellt ist. In dieser Darstellung sind die parallel liegenden Faltkanten angedeutet, entlang derer der Gassack in einer ersten Phase gefaltet wird. Es sind als geschlossene Linien dargestellte obere Faltkanten 3 sowie als gestrichelte Linien dargestellte untere Faltkanten 4 erkennbar, wobei sich oben und unten auf den Gasgenerator 1 bezieht (Fig. 4). Die Faltkanten sind im ausgebreiteten Zustand des Gassackes noch nicht vorhanden. Die Darstellung der Fig. 1 soll zeigen, an welchen Stellen bei der Faltung die Faltkanten liegen.

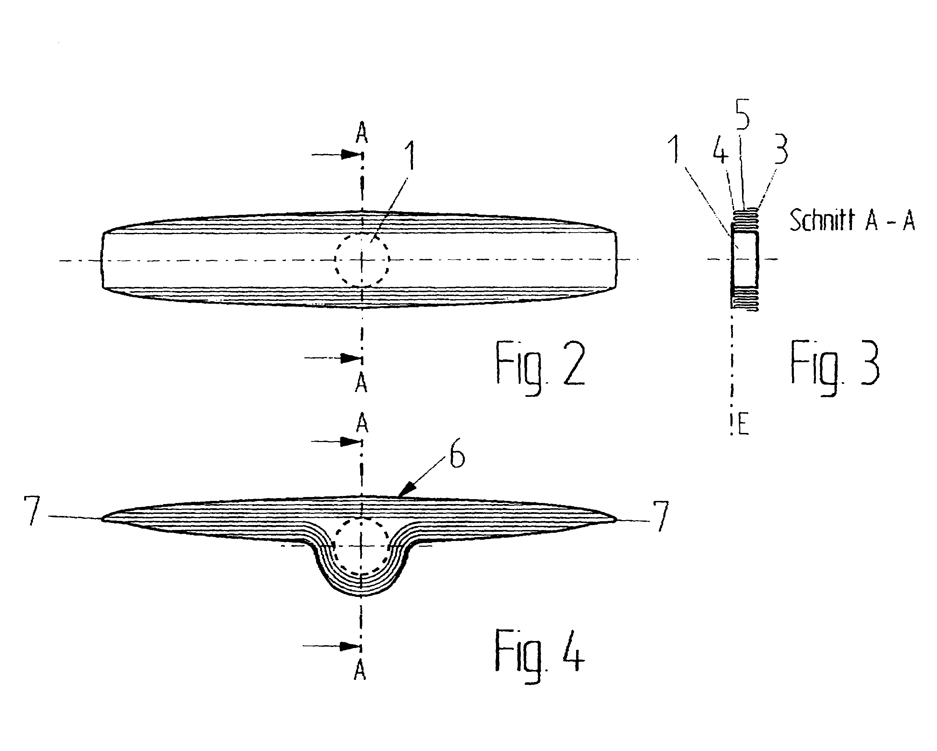

In einem ersten Arbeitsgang wird der Gassack 2 beidseitig des Gasgenerators 1 ziehharmonikaartig gefaltet, wie es aus den Figuren 2 und 4 ersichtlich ist. Die Faltkanten 3, 4 und damit auch die Faltflächen 5 liegen in der ersten Faltphase (Fig. 3) parallel. Die Höhe der Faltflächen 5 entspricht der Höhe des Gasgenerators 1.

In dem sich anschließenden Schritt werden die Abschnitte des gefalteten Gassackes, die neben dem Gasgenerator 1 liegen, weiter gegeneinander gedrückt, so daß das in der Fig. 4 dargestellte gefaltete Gassackpaket 6 entsteht.

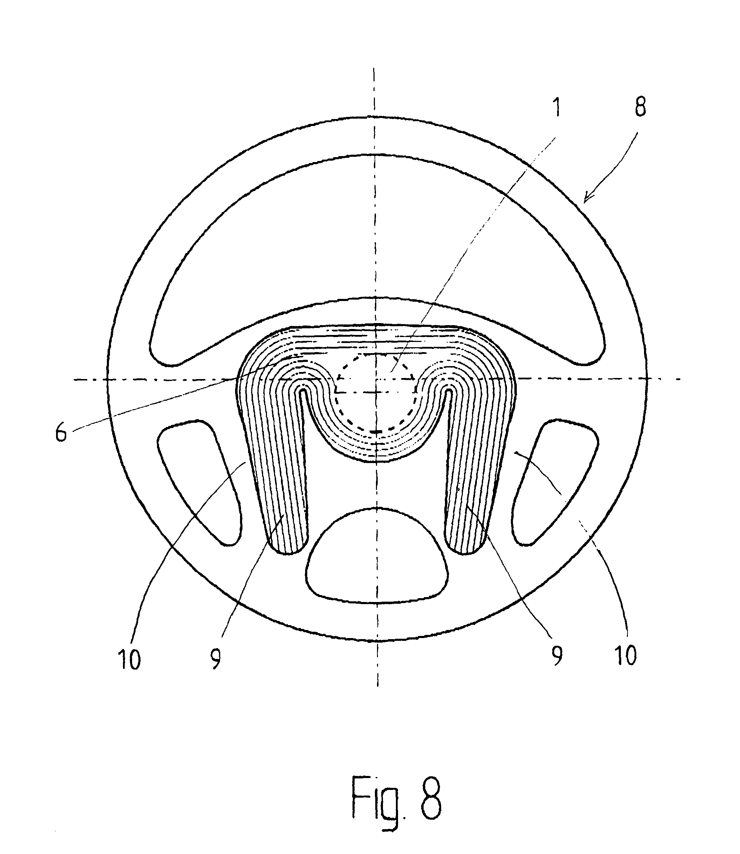

In den Figuren 5 bis 7 ist die weitere Faltung des Gassackpaketes 6 dargestellt. Wie in der Fig. 5 dargestellt, wird das Gassackpaket 6 zunächst auf gegenüberliegenden Seiten des Gasgenerators 1 in einer Ebene abgebogen, die senkrecht zu den Faltflächen 5 und parallel zu den Faltkanten 3, 4 verläuft. Anschließend wird das Gassackpaket in dieser Ebene nochmals in entgegengesetzter Richtung umgebogen, wie es aus der Fig. 6 ersichtlich ist. Schließlich werden die Enden 7 des Gassackpaketes 6 in dieser Ebene nochmals in entgegengesetzter Richtung abgebogen, wie es aus der Fig. 7 ersichtlich ist, so daß auch das Gassackpaket ziehharmonikaartig gefaltet ist. Anschließend wird dieses Paket in Richtung auf den Gasgenerator weiter zusammengedrückt, so daß es im Lenkrad eines Kraftfahrzeuges verstaut werden kann.

Da bei dieser Art der Faltung keine Teile des Gassackes übereinander gefaltet werden, kann sich dieser nach Zündung des Gasgenerators leicht entfalten, ohne daß sich Abschnitte des Gassackes gegenseitig beim Entfalten behindern.

In der Fig. 8 ist dargestellt, wie ein nach Fig. 5 gefalteter Gassack in einem Lenkrad 8 eines Kraftfahrzeuges untergebracht ist. Der in senkrechten Falten stehende Gassack wird seitlich abgebogen und die stehenbleibenden länglichen Streifen 9 des Gassackpaketes werden in platzsparender Weise neben dem Gasgenerator im Bereich der Speichen 10 des Lenkrades 8 untergebracht.

Ein derart gefaltetes und abgebogenes Gassackpaket kann auch in anderen Bauteilen im Fahrzeuginnenraum untergebracht werden, z. B. in einer Sitzlehne oder Türverkleidung als Seitenairbag oder in der Armaturentafel als Beifahrerairbag.

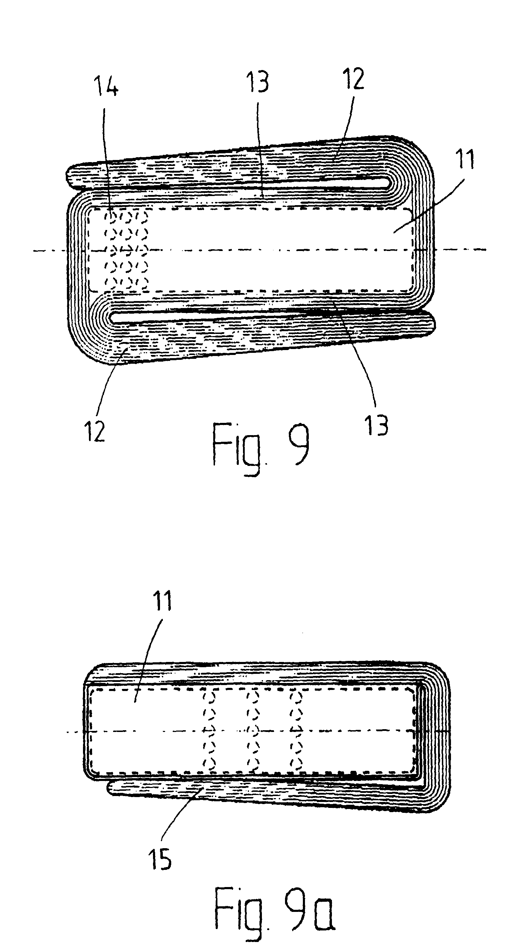

In der Fig. 9 ist die Anwendung in Verbindung mit einem zylindrischen Rohrgenerator 11 dargestellt, der im Gassack angeordnet ist. In dieser Ausführungsform wird der Gassack zunächst parallel zur Längsachse des Rohrgasgenerators 11 gefaltet. Anschließend werden dann die über die Enden des Rohrgasgenerators stehenden Streifen 12 umgebogen und an die im Bereich des Rohrgasgenerators verlaufenden Abschnitte 13 des Gassackes gelegt. Da auch bei dieser Anwendung keine Teile des Gassackes übereinander gefaltet werden, kann sich dieser nach Zündung des Gasgenerators und Austritt des Gases aus den Gasaustrittsöffnungen 14 leicht entfalten, ohne daß sich Abschnitte des Gassackes gegenseitig beim Entfalten behindern.

Auch im Ausführungsbeispiel der Fig. 9a ist wie in der Fig. 9 ein zylindrischer Rohrgasgenerator 11 dargestellt, der im Gassack angeordnet ist. Abweichend zur Fig. 9 ist jedoch der Gassack stark asymetrisch bzw. befindet sich der Gasgenerator 11 nicht im Flächenschwerpunkt des Gassackes. Diese Ausführungsform ist insbesondere als Seitenairbag geeignet. Der Gassack wird hier ebenfalls zunächst parallel zur Längsachse des Rohrgasgenerators gefaltet. Der Gassack überragt den Rohrgasgenerator nur an einem Ende. Dieser überstehende Abschnitt 15 wird dann umgebogen und an den Rohrgasgenerator angelegt.

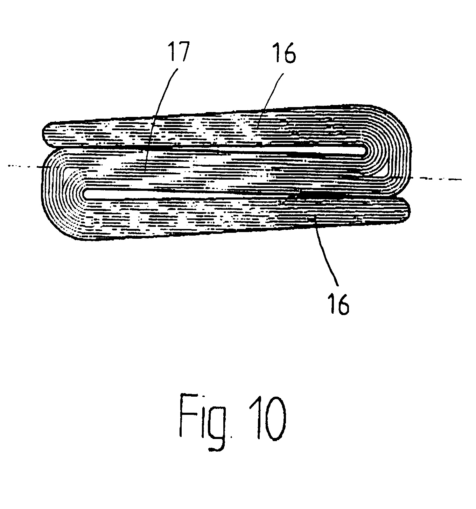

Beim Ausführungsbeipiel der Fig. 10, bei dem der Gasgenerator (nicht dargestellt) unterhalb des Gassackes vorgesehen ist, erfolgt zunächst ebenfalls eine parallele Faltung des Gassackpaketes. Anschließend werden an beiden Enden Streifen 16 in entgegengesetzter Richtung umgebogen und an das Mittelteil 17 angelegt.

Wie die Ausführungsbeispiele zeigen, kann das beanspruchte Faltverfahren für alle bekannten Generatorformen sowie für Airbagmodule mit innenliegendem Rohrgasgenerator angewendet werden. Weiterhin ist es auch für Airbagmodule mit in den Gassack hineinragendem Diffusor verwendbar.

## Patentansprüche

1. Gassack für ein Airbagmodul, wobei der Gassack im Bereich eines Gasgenerators im Ruhezustand ziehharmonikaartig gefaltet ist,
**dadurch gekennzeichnet,**
daß das durch eine geradlinige Ziehharmonikafaltung gebildete Gassackpaket (6) zusätzlich mindestens einmal in einer Ebene (E) abgebogen ist, die bezüglich der Ziehharmonikafaltung senkrecht zu den Faltflächen (5), parallel zu den beiden Ebenen, in denen jeweils die unteren und die oberen Faltkanten (3; 4) liegen, und parallel zu der im Einbauzustand dem Insassen zugewandten Frontseite des Airbagmoduls verläuft.

2. Gassack nach Anspruch 1, **dadurch gekennzeichnet,** daß das Gassackpaket (6) ausgehend von zwei bezüglich des Gasgenerators (1) gegenüberliegenden Abschnitten aus mehrfach in Richtung der Enden (7) des Gassackpaketes (6) gefaltet ist.

3. Gassack nach Anspruch 1 oder 2, **dadurch gekennzeichnet**, daß das Gassackpaket (6) mehrfach so gefaltet ist, daß in der zweiten Faltrichtung ebenfalls eine Ziehharmonikafaltung vorliegt.

4. Gassack nach mindestens einem der vorhergehenden Ansprüche, **dadurch gekennzeichnet,** daß der Gassack um einen topfförmigen Gasgenerator (1) herum gefaltet ist, wobei die Höhe des gefalteten Gassackpaketes (6) etwa der Höhe des Gasgenerators (1) entspricht.

5. Gassack nach mindestens einem der vorhergehenden Ansprüche, **dadurch gekennzeichnet**, daß der Gassack bei einem Fahrerairbagmodul seitlich des Gasgenerators (1) beidseitig abgebogen ist und daß die dabei entstehenden Streifen (9) des ziehharmonikaartig gefalteten Gassackpaketes (6) im Bereich der Speichen (10) des Lenkrades (8) untergebracht sind.

6. Gassack nach mindestens einem der vorhergehenden Ansprüche, **dadurch gekennzeichnet**, daß bei einem Airbagmodul, bei dem ein Rohrgasgenerator (11) innerhalb oder unterhalb des Gassackes angeordnet ist, der Gassack zumindest annähernd parallel zur Längsachse des Rohrgasgenerators (11) gefaltet ist und daß die über die Enden des Rohrgasgenerators (11) überstehenden Streifen (12) des gefalteten Gassackes in entgegengesetzte Richtungen abgebogen und an die mittleren Abschnitte (13) oder an das Mittelteil (16) des Gassackes angelegt sind.

7. Gassack nach mindestens einem der vorhergehenden Ansprüche, **dadurch gekennzeichnet**, daß der Gassack asymmetrich bezüglich eines Rohrgasgenerators (11) angeordnet ist, daß der zumindest annähernd parallel zur Längsachse des Rohrgasgenrators (11) gefaltete Gassack an einem Ende des Rohrgasgenerators (11) übersteht und daß der überstehende Streifen (16) einseitig an den Rohrgasgenerator (11) angelegt ist.

8. Verfahren zur Faltung eines Gassackes, **dadurch gekennzeichnet**, daß der Gassack in einem ersten Schritt in gerade, zumindest annähernd parallele ziehharmonikaartige Falten gelegt wird und daß das so entstandene Gassackpaket (6) anschließend von seinem mittleren Bereich ausgehend zum Ende der Falten hin in einer Ebene (E), die senkrecht zu den Faltflächen (5), parallel zu den beiden Ebenen, in denen jeweils die unteren und die oberen Faltkanten (3; 4) liegen, und parallel zu der im Einbauzustand dem Insassen zugewandten Frontseite des Airbagmoduls verläuft, zusätzlich mindestens einmal abgebogen wird.

9. Verfahren nach Anspruch 8, **dadurch gekennzeichnet**, daß der Gassack beidseitig eines topfförmigen Gasgenerators (1) in einem ersten Schritt in geraden, parallelen Falten in Richtung des Gasgenerators (1) gefaltet wird, in einem zweiten Schritt die am Gasgenerator (1) überstehenden Bereiche des Gassackes zu einem Paket (6) verdichtet werden, die anschließend ziehharmonikaartig an den Gasgenerator (1) herangefaltet werden.

10. Verfahren nach Anspruch 8 oder 9, **dadurch gekennzeichnet**, daß bei einem Airbagmodul, bei dem ein Rohrgasgenerator (11) innerhalb oder unterhalb des Gassackes angeordnet ist, der Gassack zumindest annähernd parallel zur Längsachse des Rohrgasgenerators (11) gefaltet wird und daß die über die Enden des Rohrgasgenerators überstehenden Streifen (12) des gefalteten Gassackes in entgegengesetzte Richtungen abgebogen und an die mittleren Abschnitte (13) oder an das Mittelteil (16) des Gassackes angelegt werden.

11. Verfahren nach Anspruch 8 oder 9, **dadurch gekennzeichnet**, daß bei einem Airbagmodul, bei dem ein Rohrgasgenerator (11) asymmetrisch innerhalb oder unterhalb des Gassackes angeordnet ist, der Gassack zumindest annähernd parallel zur Längsachse des Rohrgasgenerators (11) gefaltet wird und daß der über ein Ende des Rohrgasgenerators (11) ragende Streifen (16) des gefalteten Gassackes an den Rohrgasgenerator (11) angelegt wird.

## Claims

1. Airbag for an airbag module wherein the airbag is folded concertina-like in the area of a gas generator in the rest state, characterised in that the airbag packet (6) formed by the straight-line concertina-like folding is additionally bent down at least once in a plane (E) which in relation to the concertina-like folding runs perpendicular to the fold surfaces (5), parallel to the two planes in which the lower and upper fold edges (3;4) each lie, and parallel to the front side of the airbag module facing the occupant in the occupant in the installed state.

2. Airbag according to claim 1 characterised in that the airbag packet (6) is folded several times in the direction of the ends (7) of the airbag packet (6) starting from two opposing sections relative to the gas generator (1) .

3. Airbag according to claim 1 or 2 characterised in that the airbag packet (6) is folded several times so that a concertina-like folding likewise exists in the second folding direction.

4. Airbag according to at least one of the preceding claims, characterised in that the airbag is folded round a pot-shaped gas generator (1) wherein the height of the folded airbag packet (6) corresponds roughly to the height of the gas generator (1).

5. Airbag according to at least one of the preceding claims, characterised in that the airbag in the case of a driver airbag module is bent down each side of the gas generator (1) and that the resulting strips (9) of the concertina-like folded airbag packet (6) are stored in the area of the spokes (10) of the steering wheel (8).

6. Airbag according to at least one of the preceding claims, characterised in that in the case of an airbag module where a tubular gas generator (11) is mounted inside or underneath the airbag the airbag is folded at least approximately parallel to the longitudinal axis of the tubular gas generator (11) and that the strips (12) of the folded airbag protruding over the ends of the tubular gas generator (11) are bent down in opposite directions and are placed against the centre sections (13) or against the centre part (16) of the airbag.

7. Airbag according to at least one of the preceding claims, characterised in that the airbag is mounted asymmetric relative to a tubular gas generator (11), that the airbag folded at least approximately parallel to the longitudinal axis of the tubular gas generator (11) protrudes at one end of the tubular gas generator (11) and that the protruding strip (16) is placed on one side against the tubular gas generator (11).

8. Method for folding an airbag characterised in that the airbag is placed in a first step into straight at least roughly parallel concertina-like folds and that the ensuing airbag packet (6) is then folded additionally at least once starting from its middle area down towards the end of the folds in a plane (E) which runs perpendicular to the fold surfaces (5), parallel to the two planes in which the lower and upper fold edges (3;4) each lie and parallel to the front side of the airbag module facing the occupant in the installed state.

9. Method according to claim 8 characterised in that in a first step the airbag is folded each side of a pot-shaped gas generator (1) in straight parallel folds in the direction of the gas generator (1), and in a second step the areas of the airbag protruding at the gas generator (1) are compacted into a packet (6) which are then folded up concertina-like against the gas generator (1).

10. Method according to claim 8 or 9 characterised in that in the case of an airbag module where a tubular gas generator (11) is mounted inside or underneath the airbag the airbag is folded at least approximately parallel to the longitudinal axis of the tubular gas generator (11) and that the strips (12) of the folded airbag protruding over the ends of the tubular gas generator are bent down in opposite directions and placed against the middle sections (13) or centre part (16) of the airbag.

11. Method according to claim 8 or 9 characterised in that in the case of an airbag module where a tubular gas generator (11) is mounted- asymmetric inside or underneath the airbag the airbag is folded at least approximately parallel to the longitudinal axis of the tubular gas generator (11) and that the strip (12) of the folded airbag projecting over an end of the tubular gas generator (11) is placed against the tubular gas generator (11).

## Revendications

1. Poche à gaz pour un module d'airbag, la poche à gaz étant pliée en forme d'accordéon dans l'état de repos dans la zone d'un générateur de gaz, caractérisée en ce que le paquet de poche à gaz (6) formé par un pliage rectiligne en forme d'accordéon est recourbé en supplément au moins une fois dans un plan (E) qui s'étend, en relation au pliage en forme d'accordéon, perpendiculairement aux surfaces de pli (5), parallèlement aux deux plans dans lesquels se trouvent respectivement les arêtes de pli inférieures et supérieures (3 ; 4) et parallèlement à la face frontale du module d'airbag orientée vers le passager dans l'état monté.

2. Poche à gaz selon la revendication 1, caractérisée en ce que le paquet de poche à gaz (6) est plié, en partant de deux secteurs opposés par rapport au générateur de gaz (1), plusieurs fois en direction des extrémités (7) du paquet de poche à gaz (6).

3. Poche à gaz selon l'une ou l'autre des revendications 1 et 2, caractérisée en ce que le paquet de poche à gaz (6) est plié plusieurs fois de telle sorte qu'il se présente également un pliage en forme d'accordéon dans la seconde direction de pliage.

4. Poche à gaz selon l'une au moins des revendications précédentes, caractérisée en ce que la poche à gaz est pliée autour d'un générateur de gaz (1) en forme de pot, la hauteur du paquet de poche à gaz (6) correspondant approximativement à la hauteur du générateur de gaz (1).

5. Poche à gaz selon l'une au moins des revendications précédentes, caractérisée en ce que pour un module d'airbag pour conducteur, la poche à gaz est recourbée des deux côtés à côté du générateur de gaz (1), et en ce que les rubans (9) qui se forment alors dans le paquet de poche à gaz (6) plié en forme d'accordéon sont logés dans la zone des rayons (10) du volant (8).

6. Poche à gaz selon l'une au moins des revendications précédentes, caractérisée en ce que pour un module d'airbag dans lequel un générateur de gaz tubulaire (11) est agencé à l'intérieur ou au-dessous de la poche à gaz, la poche à gaz est pliée du moins approximativement parallèlement à l'axe longitudinal du générateur de gaz tubulaire (11), et en ce que les rubans (12) de la poche à gaz pliée qui dépassent au-delà des extrémités du générateur de gaz tubulaire sont recourbés dans des directions opposées et posés contre les secteurs médians (13) ou contre la partie médiane (16) de la poche à gaz.

7. Poche à gaz selon l'une au moins des revendications précédentes, caractérisée en ce que la poche à gaz est agencée de façon asymétrique par rapport à un générateur de gaz tubulaire (11), en ce que la poche à gaz pliée du moins approximativement parallèlement à l'axe longitudinal du générateur de gaz tubulaire (11) dépasse à une extrémité du générateur de gaz tubulaire (11), et en ce que le ruban dépassant (16) est posé sur un côté contre le générateur de gaz tubulaire (11).

8. Procédé pour plier une poche à gaz, caractérisé en ce que dans une première opération, la poche à gaz est mise en plis rectilignes et au moins approximativement parallèles en forme d'accordéon, et en ce que le paquet de poche à gaz ainsi formé (6) est ensuite recourbé au moins encore une fois en partant de sa zone médiane vers l'extrémité des plis dans un plan (E) qui s'étend perpendiculairement aux surfaces de pli (5), parallèlement aux deux plans dans lesquels se trouvent respectivement les arêtes de pli inférieures et supérieures (3 ; 4) et parallèlement à la face frontale du module d'airbag orientée vers le passager dans l'état monté.

9. Procédé selon la revendication 8, caractérisé en ce que dans une première opération, on plie la poche à gaz, des deux côtés d'un générateur de gaz (1) en forme de pot, suivant des plis rectilignes parallèles en direction du générateur de gaz (1), en ce que dans une seconde opération, on comprime les zones de la poche à gaz qui dépassent sur le générateur de gaz (1) pour former un paquet (6), et en ce que ces zones sont repliées ensuite en forme d'accordéon contre le générateur de gaz (1).

10. Procédé selon l'une ou l'autre des revendications 8 et 9, caractérisé en ce que dans un module d'airbag dans lequel un générateur de gaz tubulaire (11) est agencé à l'intérieur ou au-dessous de la poche à gaz, on plie la poche à gaz du moins approximativement parallèlement à l'axe longitudinal du générateur de gaz tubulaire (11), et en ce que l'on recourbe dans des directions opposées les rubans (12) de la poche à gaz pliée qui dépassent au-delà des extrémités du générateur de gaz tubulaire, et on les pose contre les secteurs médians (13) ou contre la partie médiane (16) de la poche à gaz.

11. Procédé selon l'une ou l'autre des revendications 8 et 9, caractérisé en ce que pour un module d'airbag dans lequel un générateur de gaz tubulaire (11) est agencé de façon asymétrique à l'intérieur ou au-dessous de la poche à gaz, on plie la poche à gaz au moins approximativement parallèlement à l'axe longitudinal du générateur de gaz tubulaire (11), et en ce que l'on pose le ruban (16) de la poche à gaz pliée, lequel dépasse au-delà d'une extrémité du générateur de gaz tubulaire (11), contre le générateur de gaz tubulaire (11).
